# EUROPEAN PATENT APPLICATION

(11) **EP 1 981 296 A1**
(43) Date of publication of application: **15.10.2008**
(21) Application number: 08006987.5
(22) Date of filing: 08.04.2008
(51) Int. Cl.: H04Q 7/32

(54) **Mobile communication terminal connectable to network**

(30) Priority: 13.04.2007 JP 2007105919
(71) Applicant: Funai Electric Co., Ltd., Daito-shi, Osaka 574-0013 (JP)
(72) Inventor: Izukawa, Shintaro, Daito-shi Osaka 574-0013 (JP); Masaki, Yasuo, Daito-shi Osaka 574-0013 (JP); Ishibashi, Kenji, Daito-shi Osaka 574-0013 (JP); Tsubota, Hirono, Daito-shi Osaka 574-0013 (JP)
(74) Representative: Grünecker, Kinkeldey, Stockmair & Schwanhäusser Anwaltssozietät

(57) **Abstract**

A mobile communication terminal (50) includes a first communication unit (52) connectable to a first communication apparatus (124) via a first network (112) using a first wireless communication protocol, a second communication unit (54) connectable to a second communication apparatus (120) via a second network (110) using a second wireless communication protocol different from the first wireless communication protocol, a controller (60) configured to control the first and second communication units, a microphone (56), and a speaker (58). The controller (60) transmits first data, addressed to the second communication apparatus (120), to the second network (110), transmits second data, addressed to the first communication apparatus (124), to the first network (112), causes the speaker (58) to convert into corresponding voice a second voice signal addressed to the mobile communication terminal (50), and transmits a first voice signal.

## Description

### BACKGROUND OF THE INVENTION

### Field of the Invention

The present invention relates to a mobile communication terminal connectable to a network, and in particular to a mobile communication terminal connectable to a network using a plurality of different wireless communication protocols. Description of the Background Art

Japanese Patent Laying-Open No. 2004-134874 discloses a connection device having a router function interconnecting a wide area network and a wireless local area network, and connecting a client on the wireless local area network to the wide area network. The connection device includes a voice information storage device, a transfer device, and a transmission device. The voice information storage device stores voice information that can be reproduced at the client. The transfer device implements a voice call between the client and another apparatus on the wide area network using a protocol for the wide area network. The transmission device starts processing to transmit the stored voice information to the client using the protocol for the wide area network, based on a call signal transmitted from the client to the other apparatus or a signal transmitted from the other apparatus to the client, and terminates the processing based on a signal transmitted from the other apparatus to the client.

According to the invention disclosed in Japanese Patent Laying-Open No. 2004-134874, advertisement information for IP (Internet Protocol) telephony can be attached without providing a specific server which causes all data for an IP telephony system to pass therethrough and attaches advertisement information.

Japanese Patent Laying-Open No. 2002-009879 discloses a wearable network system configured by a plurality of portable electronic apparatuses. A mobile phone terminal, which is one of the plurality of electronic apparatuses, connects with an external network. A camera, which is another apparatus, picks up an image of a subject, generates image data thereof, and transmits the generated image data to the mobile phone terminal.

According to the invention disclosed in Japanese Patent Laying-Open No. 2002-009879, portable electronic apparatuses can be combined and utilized as a system.

Japanese Patent Laying-Open No. 2002-247186 discloses an infrared communication unit having a connector portion and a communication portion. The connector portion is attached to and detached from an external connector provided to a mobile phone. The communication portion communicates with a mobile information terminal having an infrared port using an infrared ray.

According to the invention disclosed in Japanese Patent Laying-Open No. 2002-247186, the mobile information terminal can be connected to an external network via the mobile phone, without using a connection cable.

Japanese Patent Laying-Open No. 2004-214919 discloses a mobile calling tool including a communication connection portion, a voice data input/output portion, a compression/expansion portion, a display portion and an operation portion, a connection portion for physically connecting to an electronic apparatus, a power supply portion, an electronic apparatus data input/output portion, and a communication time measurement portion. The communication connection portion communicates voice data using a Bluetooth device. The voice data input/output portion inputs/outputs the voice data. The compression/expansion portion compresses/expands the voice data. The power supply portion is supplied with power from the electronic apparatus via the connection portion. The electronic apparatus data input/output portion inputs/outputs data to and from the electronic apparatus via the connection portion. The communication time measurement portion measures communication time.

According to the invention disclosed in Japanese Patent Laying-Open No. 2004-214919, communication as IP telephony using a Bluetooth device can be performed without using a mobile phone for IP telephony.

### SUMMARY OF THE INVENTION

According to an aspect of the present invention, a mobile communication terminal is provided. The mobile communication terminal includes a first communication unit connectable to a first communication apparatus via a first network using a first wireless communication protocol, a second communication unit connectable to a second communication apparatus via a second network using a second wireless communication protocol different from the first wireless communication protocol, a controller configured to control the first and second communication units, a microphone converting input voice into a first voice signal, and a speaker converting a second voice signal into corresponding voice. The controller transmits first data, addressed to the second communication apparatus and received by the first communication unit, to the second network via the second communication unit, transmits second data, addressed to the first communication apparatus and received by the second communication unit, to the first network via the first communication unit, causes the speaker to convert into the corresponding voice said second voice signal, addressed to the mobile communication terminal and received by either one of the first and second communication units, and transmits the first voice signal via the either one of the first and second communication units.

Preferably, a communication range of the first communication unit is larger than a communication range of the second communication unit.

Preferably, the controller performs data transmission/reception according to an Internet protocol via the first and second communication units.

Preferably, the controller determines whether or not at least one of the first and second communication units is transmitting/receiving the first/second voice signal, and sets a communication speed for the one of the first and second communication units based on a determination result.

Preferably, the controller counts a number of the communication apparatuses communicating with the second communication unit based on the data received by the second communication unit, and sets a communication speed for at least one of the first and second communication units based on a count result.

Preferably, when the controller is transmitting/receiving the data, the controller sets a sampling rate at which the input voice is converted into the first voice signal to be lower than that when the controller is not transmitting/receiving the data.

According to another aspect of the present invention, a communication method in a mobile communication terminal is provided. The mobile communication terminal includes a first communication unit connectable to a first communication apparatus via a first network using a first wireless communication protocol, a second communication unit connectable to a second communication apparatus via a second network using a second wireless communication protocol different from the first wireless communication protocol, a controller configured to control the first and second communication units, a microphone converting input voice into a first voice signal, and a speaker converting a second voice signal into corresponding voice. The communication method includes the steps of transmitting first data, addressed to the second communication apparatus from the first network, to the second network, transmitting second data, addressed to the first communication apparatus from the second network, to the first network, outputting the correspoding voice based on the second voice signal addressed to the mobile communication terminal from either one of the first and second networks, and transmitting the first voice signal to the either one of the first and second networks.

Preferably, a communication range of the first communication unit is larger than a communication range of the second communication unit.

Preferably, the controller performs data transmission/reception according to an Internet protocol via the first and second communication units.

Preferably, the communication method further includes the steps of determining whether or not at least one of the first and second communication units is transmitting/receiving the first/second voice signal, and setting a communication speed for the one of the first and second communication units based on a determination result.

Preferably, the communication method further includes the steps of counting a number of the communication apparatuses communicating with the second communication unit based on the data received by the second communication unit, and setting a communication speed for at least one of the first and second communication units based on a count result.

Preferably, the communication method further includes the step of setting a sampling rate at which the input voice is converted into the first voice signal when transmitting/receiving the data addressed to the first and second communication units, to be lower than that when not transmitting/receiving the data addressed to the first and second communication units.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 shows a functional configuration of a mobile communication terminal in accordance with a first embodiment of the present invention.
Fig. 2 is a flow chart illustrating a processing procedure in communication processing in accordance with the first embodiment of the present invention.
Fig. 3 shows a functional configuration of a mobile communication terminal in accordance with a second embodiment of the present invention.
Fig. 4 is a flow chart illustrating a processing procedure in communication processing in accordance with the second embodiment of the present invention.

### DESCRIPTION OF THE PREFERRED EMBODIMENTS

Hereinafter, embodiments of the present invention will be described with reference to the drawings. In the description below, identical parts are denoted by the same numerals. Since they are identical in name and function, detailed description thereof will not be repeated.

### First Embodiment

Hereinafter, a mobile communication terminal 50 in accordance with a first embodiment of the present invention will be described.

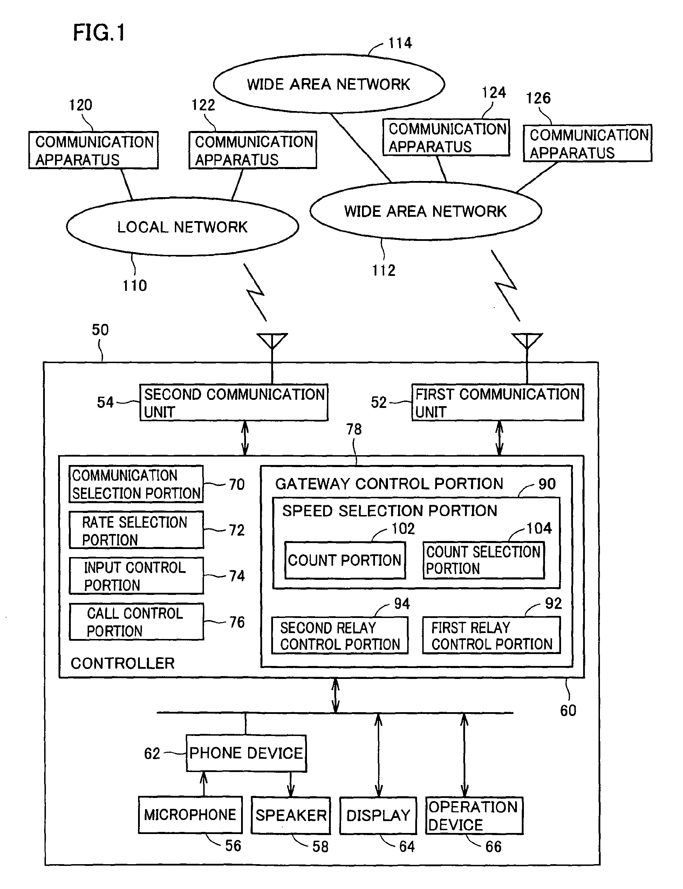

Fig. 1 shows a functional configuration of mobile communication terminal 50 in accordance with the present embodiment. In the present embodiment, mobile communication terminal 50 communicates with a local network 110 and a wide area network 112. Actually, mobile communication terminal 50 communicates with communication apparatuses 120 and 122 included in local network 110, communication apparatuses 124 and 126 included in wide area network 112, and the like. Wide area network 112 is connected to another wide area network 114. Wide area network 112 and the other wide area network 114 transmit and receive data therebetween. Wide area networks 112 and 114 are connected to still another wide area network not shown.

The Internet includes a large number of such wide area networks. Mobile communication terminal 50 and communication apparatuses 124 and 126 included in wide area networks 112 and 114 are connected to the Internet. For each of mobile communication terminal 50 and communication apparatuses 120, 122, 124, and 126, identification information for distinguishing each of them from the others (for example, an identification address) is set beforehand. Mobile communication terminal 50 and communication apparatuses 120, 122, 124, and 126 transmit data with identification information of a destination attached thereto. Based on identification information attached to each transmitted and received data, each communication apparatus included in the Internet such as a router or mobile communication terminal 50 transmits the transmitted and received data to a communication apparatus for which the identification information is set.

Referring to Fig. 1, mobile communication terminal 50 includes a first communication unit 52, a second communication unit 54, a microphone 56, a speaker 58, a controller 60, a phone device 62, a display 64, and an operation device 66.

The first communication unit 52 wirelessly communicates data with wide area network 112 according to an Internet protocol. The communication standard (wireless communication protocol) for the communication is not specifically limited, and examples thereof include WiMAX (Worldwide Interoperability for Microwave Access; registered trademark) and TD-CDMA (Time Division-Code Division Multiple Access).

In the present embodiment, the "Internet protocol" is a protocol for a network layer in an OSI (Open System Interconnection) reference model, and is a protocol applicable to communication over the Internet. Examples of Internet protocols include IPv4 (Internet Protocol Version 4) and IPv6 (Internet Protocol Version 6).

The second communication unit 54 wirelessly communicates data with local network 110 according to the same Internet protocol as that for the first communication unit 52. The communication standard therefor is also not specifically limited, and examples thereof include WiFi (Wireless Fidelity; registered trademark), Bluetooth (registered trademark), and Wireless USB (Wireless Universal Serial Bus).

The communication standard for the second communication unit 54 is different from the communication standard for the first communication unit 52. It is desirable that the communication standard for the second communication unit 54 is suitable for short distance communication, compared to the communication standard for the first communication unit 52.

The second communication unit 54 is included in the Internet, together with wide area network 112. The second communication unit 54 communicates with a network not shown that can communicate according to the same communication standard as that for local network 110. This allows a user of mobile communication terminal 50 to communicate using one mobile communication terminal 50 both when communicating according to the communication standard for local network 110 and when communicating according to the communication standard for wide area network 112.

Microphone 56 receives an input of voice from the user and generates an electrical signal. Speaker 58 outputs voice based on an electrical signal.

Controller 60 is implemented for example by a CPU (Central Processing Unit). Controller 60 controls the first communication unit 52 and the second communication unit 54. Controller 60 extracts identification information of data received by the first communication unit 52 and the second communication unit 54.

Controller 60 transmits data addressed to communication apparatuses 120 and 122 received by the first communication unit 52 to local network 110 via the second communication unit 54. Preferably, when destination identification information of the data received by the first communication unit 52 is different from identification information of mobile communication terminal 50, controller 60 transmits the data to local network 110 via the second communication unit 54. Specifically, controller 60 transmits data, received from wide area network 112 based on a first communication protocol, to local network 110 based on a second communication protocol. More specifically, Controller 60 transmits data, received from wide area network 112 based on the CDMA scheme, to local network 110 based on the Bluetooth scheme.

Controller 60 transmits data addressed to communication apparatuses 124 and 126 received by the second communication unit 54 to wide area network 112 via the first communication unit 52. Preferably, when destination identification information of the data received by the second communication unit 54 is different from the identification information of mobile communication terminal 50, controller 60 transmits the data to wide area network 112 via the first communication unit 52. Specifically, controller 60 transmits data, received from local network 110 based on the second communication protocol, to wide area network 112 based on the first communication protocol. More specifically, Controller 60 transmits data, received from local network 110 based on the Bluetooth scheme, to wide area network 112 based on the CDMA scheme.

Further, when destination identification information of voice data received by either of the first communication unit 52 and the second communication unit 54 matches the identification information of mobile communication terminal 50, controller 60 causes speaker 58 to output voice based on the voice data. Controller 60 transmits voice data via that communication unit, based on a voice signal from microphone 56.

Phone device 62 converts an electrical signal output by microphone 56 into a signal of voice data suitable for communication by the first communication unit 52 and the second communication unit 54. Phone device 62 converts voice data output by controller 60 into an electrical signal that can be output by speaker 58 as voice. In the present embodiment, a voice input module includes microphone 56 and a portion of phone device 62, and a voice output module includes speaker 58 and another portion of phone device 62.

Display 64 displays information output by controller 60 as a signal. Operation device 66 receives an operation for a call from the user. Information is input to operation device 66 by the user.

Controller 60 includes a communication selection portion 70, a rate selection portion 72, an input control portion 74, a call control portion 76, and a gateway control portion 78.

Communication selection portion 70 selects one of the first communication unit 52 and the second communication unit 54.

Rate selection portion 72 selects a sampling rate for a signal generated by the voice input module. In the present embodiment, rate selection portion 72 selects a sampling rate according to whether or not gateway control portion 78 controls the first communication unit 52 and the second communication unit 54.

Input control portion 74 controls the voice input module to generate a signal at the sampling rate selected by rate selection portion 72.

Call control portion 76 controls the first communication unit 52 and the second communication unit 54 based on an operation received by operation device 66. Call control portion 76 controls the communication unit selected by communication selection portion 70 to transmit voice data generated by the voice input module as a signal to communication apparatuses 124 and 126. Call control portion 76 controls the communication unit selected by communication selection portion 70 to receive voice data from communication apparatuses 124 and 126.

Gateway control portion 78 causes the second communication unit 54 to transmit the data received by the first communication unit 52. Gateway control portion 78 causes the first communication unit 52 to transmit the data received by the second communication unit 54.

Gateway control portion 78 includes a speed selection portion 90, a first relay control portion 92, and a second relay control portion 94.

Speed selection portion 90 selects any of plural types of communication speeds. In the present embodiment, speed selection portion 90 selects a communication speed for the first communication unit 52 and a communication speed for the second communication unit 54. Speed selection portion 90 may select one type of communication speed, and the first communication unit 52 and the second communication unit 54 may communicate at the communication speed.

The first relay control portion 92 causes the first communication unit 52 to transmit data addressed to communication apparatuses 124 and 126 at the communication speed selected by speed selection portion 90, based on information indicating a destination and information indicating a relay designation received by the second communication unit 54. While the communication unit selected by communication selection portion 70 is communicating voice data, the first relay control portion 92 causes the first communication unit 52 to transmit the data received by the second communication unit 54 at the communication speed selected by speed selection portion 90, in parallel with the communication by the communication unit selected by communication selection portion 70.

The second relay control portion 94 causes the second communication unit 54 to transmit data addressed to communication apparatuses 120 and 122 at the communication speed selected by speed selection portion 90, based on information indicating a destination and information indicating a relay designation received by the first communication unit 52. While the communication unit selected by communication selection portion 70 is communicating voice data, the second relay control portion 94 causes the second communication unit 54 to transmit the data received by the first communication unit 52 at the communication speed selected by speed selection portion 90, in parallel with the communication by the communication unit selected by communication selection portion 70.

Speed selection portion 90 includes a count portion 102 and a count selection portion 104.

Count portion 102 counts the number of the communication apparatuses communicating with the second communication unit 54, based on the data received by the second communication unit 54. Count portion 102 counts the number of the communication apparatuses communicating with the first communication unit 52 and the second communication unit 54, based on the types of identification information attached to the data transmitted/received by the first communication unit 52 and the second communication unit 54. Count selection portion 104 selects a communication speed corresponding to the number of the communication apparatuses counted by count portion 102 from among the plural types of communication speeds set beforehand.

In the present embodiment, a block configured by call control portion 76 and gateway control portion 78 is referred to as a "communication control block".

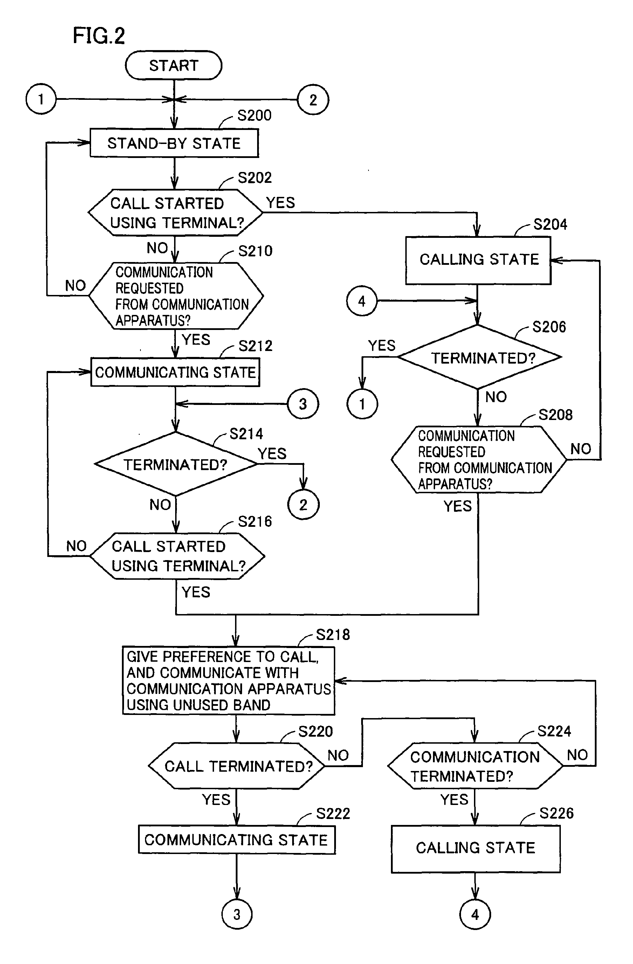

Referring to Fig. 2, a program executed in controller 60 performs control as described below for the communication with communication apparatuses 120 and 122 and communication apparatuses 124 and 126.

In step S200, call control portion 76 detects a signal received by the first communication unit 52 and the second communication unit 54. In the present embodiment, a state in which communication of a data signal with communication apparatus 120, 122, 124, or 126 is not being performed, and call control portion 76 periodically detects whether or not the first communication unit 52 and the second communication unit 54 receive a signal is referred to as a "standby state". Count portion 102 in accordance with the present embodiment counts the number of the communication apparatuses from which the second communication unit 54 can receive data, based on data received by the second communication unit 54 as a signal, during a period of the standby state.

In step S202, call control portion 76 determines whether or not a signal requesting to receive an incoming call (i.e., data addressed to mobile communication terminal 50) is received, or whether or not another instruction for starting communication for a call is input. If the first communication unit 52 or the second communication unit 54 already receives a signal for a call, if operation device 66 receives an operation for starting a call, or the like (YES in step S202), the process moves to step S204. Otherwise (NO in step S202), the process moves to step S210.

In step S204, communication selection portion 70 selects a communication unit communicating the signal for a call. If either of the first communication unit 52 and the second communication unit 54 receives the signal for a call, communication selection portion 70 selects the communication unit that receives the signal. If operation device 66 receives the operation for starting a call, communication selection portion 70 selects a predetermined communication unit from among the first communication unit 52 and the second communication unit 54.

When communication selection portion 70 selects the communication unit, count selection portion 104 selects a communication speed corresponding to the number of communication apparatuses 120 and 122 counted by count portion 102 in step S200. When the communication speed is selected, call control portion 76 establishes communication with one of communication apparatuses 120 and 122 included in local network 110, communication apparatuses 124 and 126 included in wide area network 112, and the like, using the communication unit selected by communication selection portion 70. If a signal is transmitted in step S200, the signal has been transmitted from the communication apparatus that establishes communication with call control portion 76. If operation device 66 receives the operation for starting a call in step S202, the communication apparatus indicated by the operation information input to operation device 66.

The communication speed is any of the plurality of predetermined communication speeds. Rate selection portion 72 selects a sampling rate preferable for a communication condition from among a plurality of sampling rates set beforehand. Call control portion 76 transmits voice data generated by the voice input module according to the sampling rate selected by rate selection portion 72, and causes the first communication unit 52 to receive voice data from communication apparatus 120, 122, 124, or 126.

In step S206, call control portion 76 determines whether or not to terminate the call. Call control portion 76 terminates the call when operation device 66 receives an operation for terminating the call and when the communication unit selected in step S204 receives a signal for terminating the call. If the call is terminated (YES in step S206), the process moves to step S200. Otherwise (NO in step S206), the process moves to step S208,

In step S208, the second relay control portion 94 determines whether or not the second communication unit 54 receives a signal for requesting to establish communication with communication apparatus 124 (i.e., information for designating relay, or data addressed to communication apparatus 124) from communication apparatus 120. If the second communication unit 54 receives the signal for requesting to establish communication (YES in step S208), the process moves to step S218. Otherwise (NO in step S208), the process moves to step S204.

Similarly, in step S210, the second relay control portion 94 determines whether or not the second communication unit 54 receives a signal for requesting to establish communication (i.e., information for designating relay, or data addressed to communication apparatus 124) from communication apparatus 120. If the second communication unit receives the signal for requesting to establish communication (YES in step S210), the process moves to step S212. Otherwise (NO in step S210), the process moves to step S200.

In step S212, count selection portion 104 selects a communication speed corresponding to the number of communication apparatuses 120 and 122 counted by count portion 102 in step S200, from among the plural types of predetermined communication speeds. When the communication speed is selected, the first relay control portion 92 establishes communication with communication apparatus 124, using the first communication unit 52. When the communication is established, the first relay control portion 92 controls the first communication unit 52 to communicate information with communication apparatus 124. The second relay control portion 94 establishes communication with communication apparatus 120, using the second communication unit 54. When the communication is established, the second relay control portion 94 controls the second communication unit 54 to communicate information. If the first communication unit 52 establishes communication with a plurality of communication apparatuses simultaneously, the first relay control portion 92 performs routing for the communication of those communication apparatuses.

In step S214, the second relay control portion 94 determines whether or not to terminate the communication with communication apparatus 120, based on a signal communicated by the second communication unit 54. If the communication is terminated (YES in step S214), the process moves to step S200. Otherwise (NO in step S214), the process moves to step S216.

In step S216, call control portion 76 determines whether or not to start communication for a call, based on a signal received by the first communication unit 52, a signal received by the second communication unit 54, or an operation received by operation device 66. For example, if the signal received by the first communication unit 52 and the signal received by the second communication unit 54 are a signal for starting a call (i.e., data addressed to mobile communication terminal 50), if operation device 66 receives an operation for starting a call, or the like, call control portion 76 determines to start communication for a call. If the communication for a call is started (YES in step S216), the process moves to step S218. Otherwise (NO in step S216), the process moves to step S212.

In step S218, if neither the first communication unit 52 nor the second communication unit 54 communicates voice data yet, rate selection portion 72 selects a sampling rate for the voice input module. Rate selection portion 72 selects the sampling rate to have a value lower than that when only one of the communication with communication apparatus 120 and the communication for a call with communication apparatus 124 is being performed.

If the first communication unit 52 or the second communication unit 54 is already communicating voice data, the sampling rate is already selected and thus is not selected again. If a sampling rate is to be selected, the voice input module starts generation of a voice signal after the sampling rate is selected, at the selected sampling rate. If a sampling rate is not to be selected, the voice input module starts generation of a voice signal when this step is started, at the sampling rate already selected. When the generation of a voice signal is started, call control portion 76 controls the communication unit, selected by communication selection portion 70 from among the first communication unit 52 and the second communication unit 54, to start transmitting voice data indicated by the signal and receiving voice data from communication apparatus 124.

If the control of the communication unit selected by communication selection portion 70 is started in this step, in step S212, the first relay control portion 92 starts controlling the first communication unit 52. The second relay control portion 94 starts controlling the second communication unit 54. With these controls, the first communication unit 52 transmits a data signal received by the second communication unit 54 at a communication speed selected by count selection portion 104 for the first communication unit 52. The second communication unit 54 transmits a data signal received by the first communication unit 52 at a communication speed selected by count selection portion 104 for the second communication unit 54. These communication speeds are selected in step S212.

If the communication unit selected by communication selection portion 70 from among the first communication unit 52 and the second communication unit 54 already starts communication of voice data for a call, the first relay control portion 92 starts controlling the first communication unit 52. The second relay control portion 94 starts controlling the second communication unit 54. With these controls, the first communication unit 52 starts transmitting data received by the second communication unit 54 at a communication speed selected by count selection portion 104 for the first communication unit 52. The second communication unit 54 starts transmitting data received by the first communication unit 52 at a communication speed selected by count selection portion 104 for the second communication unit 54. These communication speeds are selected in step S204.

In the present embodiment, the first relay control portion 92 causes the first communication unit 52 to communicate data using a band not used for communicating voice data. The second relay control portion 94 causes the second communication unit 54 to communicate data using a band not used for communicating voice data. If the controls by the first relay control portion 92 and the second relay control portion 94 are each started prior to the control by call control portion 76, data other than voice data is forced to be communicated using a band used for communicating voice data. The first relay control portion 92 and the second relay control portion 94 cause the first communication unit 52 and the second communication unit 54 to transmit a packet of voice data in preference to a packet of data other than that.

In step S220, call control portion 76 determines whether or not to terminate the communication for the call. Call control portion 76 determines to terminate the communication for the call when the first communication unit 52 or the second communication unit 54 receives a signal for terminating the call, when operation device 66 receives an operation for terminating the call, or the like. If the communication for the call is terminated (YES in step S220), the process moves to step S222. Otherwise (NO in step S220), the process moves to step S224.

In step S222, the second relay control portion 94 continues to control the second communication unit 54. Thereby, the second communication unit 54 continues to communicate with communication apparatus 120.

In step S224, the second relay control portion 94 determines whether or not to terminate the communication with communication apparatus 120, based on data received from communication apparatus 120. If the communication with communication apparatus 120 is terminated (YES in step S224), the process moves to step S226. Otherwise (NO in step S224), the process moves to step S218.

In step S226, the communication unit selected by communication selection portion 70 from among the first communication unit 52 and the second communication unit 54 continues to communicate with communication apparatus 124.

An operation of mobile communication terminal 50 based on the configuration and the flow chart as described above will be further described in detail.

### [When communication apparatus 120 accesses wide area network 112 during a call]

Call control portion 76 detects a signal received by the first communication unit 52 and the second communication unit 54 (step S200).

Upon detecting a signal, call control portion 76 determines whether or not to start communication for a call (step S202). If operation device 66 receives an operation for starting a call (YES in step S202), communication selection portion 70 selects a communication unit communicating a signal for a call. It is assumed herein that the first communication unit 52 receives the signal for a call from communication apparatus 124. Since the first communication unit 52 receives the signal, communication selection portion 70 selects the first communication unit 52. When the first communication unit 52 is selected, call control portion 76 establishes communication with communication apparatus 124 (step S204).

When the communication is established, call control portion 76 determines whether or not to terminate the call (step S206). If the call is not terminated (NO in step S206), the second relay control portion 94 determines whether or not communication apparatus 120 requests to establish communication with communication apparatus 124 or 126 (step S208).

If communication apparatus 120 requests to establish communication (YES in step S208), the first communication unit 52 starts transmitting data received by the second communication unit 54 at a communication speed selected by count selection portion 104 for the first communication unit 52. The second communication unit 54 starts transmitting data received by the first communication unit 52 at a communication speed selected by count selection portion 104 for the second communication unit 54 (step S218).

Thereafter, call control portion 76 determines whether or not to terminate the communication for the call (step S220). If the call is not terminated (NO in step S220), the second relay control portion 94 determines whether or not to terminate the communication with communication apparatus 120 (step S224). If the communication is not terminated (NO in step S224), the processes from step S218 onward are repeated.

### [When an incoming call arrives during data communication with a communication apparatus]

After the process in step S200, call control portion 76 determines whether or not to start communication for a call (step S202). If operation device 66 does not receive an operation for starting a call (NO in step S202), the second relay control portion 94 determines whether or not communication apparatus 120 requests to establish communication with communication apparatus 124 or 126 (step S210).

If communication apparatus 120 requests to establish communication (YES in step S210), count selection portion 104 selects a communication speed. When the communication speed is selected, the first relay control portion 92 establishes communication with communication apparatus 124. When the communication is established, the first relay control portion 92 controls the first communication unit 52 to communicate information. The second relay control portion 94 establishes communication with communication apparatus 120. When the communication is established, the second relay control portion 94 controls the second communication unit 54 to communicate information with communication apparatus 120 (step S212). Thereby, mobile communication terminal 50 relays communication of information between communication apparatus 120 and communication apparatus 124.

Thereafter, the second relay control portion 94 determines whether or not to terminate the communication with communication apparatus 120 (step S214). If the communication with communication apparatus 120 is not terminated (NO in step S214), call control portion 76 determines whether or not to start communication for a call (step S216).

If the communication for a call is started (YES in step S216), rate selection portion 72 selects a sampling rate with a value lower than that when only the communication with communication apparatus 120 is being performed. Thereafter, the voice input module starts generation of a voice signal at the sampling rate selected by rate selection portion 72. When the generation of a voice signal is started, call control portion 76 controls the communication unit selected by communication selection portion 70 to start transmitting voice data indicated by the signal and receiving voice data from communication apparatus 124 (step S218).

As described above, mobile communication terminal 50 in accordance with the present embodiment communicates with communication apparatus 124 using the communication unit selected by communication selection portion 70. Specifically, mobile communication terminal 50 can perform data relay (a routing function, a gateway function) between communication apparatuses 120 and 122 and communication apparatuses 124 and 126, while performing a call with another communication device. Since one of the two types of communication units capable of performing wireless communication according to mutually different standards can be selected for communication, communication for a call can be performed using a communication unit suitable for a communication condition in a location of mobile communication terminal 50.

Further, the two types of communication units mounted to mobile communication terminal 50 in accordance with the present embodiment both communicate data according to an Internet protocol.

Generally, when a plurality of communication units are mounted to one mobile communication terminal, a path for information communicated by these communication units between one communication unit and another communication unit may be different in a forward path and a return path.

In contrast, a path for information communicated by the two types of communication units mounted to mobile communication terminal 50 in accordance with the present embodiment is identical in a forward path and a return path in at least a portion thereof (the first communication unit 52, controller 60, the second communication unit 54).

Generally, mounting a plurality of communication units intended to go through the identical network in at least a portion of a path to one mobile communication terminal is considered to be useless. Therefore, such a product is inconceivable for a person involved in the design and manufacture of mobile communication terminals.

However, when a plurality of communication units intended to go through the identical network in at least a portion of a path are mounted to one mobile communication terminal, cost taken for one communication is reduced, compared to a case where a communication path via a plurality of communication units mounted to one mobile communication terminal is different in a forward path and a return path. This is because, among the cost taken for one communication, cost not corresponding to the amount of communicated information, such as depreciation cost for communication equipment, is reduced.

Further, as described above, the two types of communication units mounted to mobile communication terminal 50 in accordance with the present embodiment both communicate data according to an Internet protocol. When data is communicated according to an Internet protocol, even if either communication unit is used, the communication unit does not occupy a communication line. If one of the two types of communication units described above is of a type occupying a communication line, cost for a call using the communication unit is increased. Since mobile communication terminal 50 in accordance with the present embodiment does not occupy a communication line, the cost for a call can be reduced. Thereby, the cost for a call in mobile communication terminal 50 in accordance with the present embodiment averages lower than that in a mobile communication terminal equipped with a communication unit of a type occupying a communication line.

Further, mobile communication terminal 50 in accordance with the present embodiment allows a user to perform a call in parallel with data communication between communication apparatus 124 and communication apparatus 120. Since voice data communication for a call can be performed in parallel with the data communication, cost for each type of communication taken when both types of communication are performed in parallel is lower than cost taken when only one type of communication is performed.

As a result, a mobile communication terminal reducing the sum of costs taken for one communication when a user communicates data via the Internet at a desired location can be provided.

Further, when mobile communication terminal 50 in accordance with the present embodiment allows a user to perform a call in parallel with data communication, mobile communication terminal 50 reduces a communication speed for the data communication. When the communication speed is reduced, communication of a packet of voice data is facilitated, compared to a case where the communication speed is not reduced. When the communication is facilitated, voice is less likely to be interrupted during the call, and thus the user is less likely to feel uncomfortable with the interrupted voice.

Further, mobile communication terminal 50 in accordance with the present embodiment selects a sampling rate for voice data according to whether or not data communication is being performed. Thereby, when data communication is being performed, the sampling rate can be set lower, compared to a case where data communication is not being performed. This reduces the amount of packets including voice data, and thus time taken for data communication is less likely to be increased, and voice is less likely to be interrupted during a call.

Further, mobile communication terminal 50 in accordance with the present embodiment reduces a communication speed according to the number of the communication apparatuses with which data communication can be performed. When a user is allowed to perform a call in parallel with data communication, if the communication speed for the data communication is set at a constant speed, voice is likely to be interrupted during the call even though the communication speed is reduced, depending on the number of the communication apparatuses with which the data communication can be performed. This is because, with an increase in the number of the communication apparatuses with which data communication can be performed, the amount of data to be communicated is increased accordingly. Occurrence of such a problem can be suppressed by reducing a communication speed according to the number of the communication apparatuses with which data communication can be performed.

It is to be noted that, in a variation of the present embodiment, call control portion 76 and gateway control portion 78 do not have to be units operable independently of each other. For example, a unit operating only in a case where mobile communication terminal 50 is operated as a phone, a unit operating only in a case where mobile communication terminal 50 is operated as a gateway device, and a unit operating in both cases may constitute one communication control block.

### Second Embodiment

Hereinafter, a mobile communication terminal in accordance with a second embodiment of the present invention will be described.

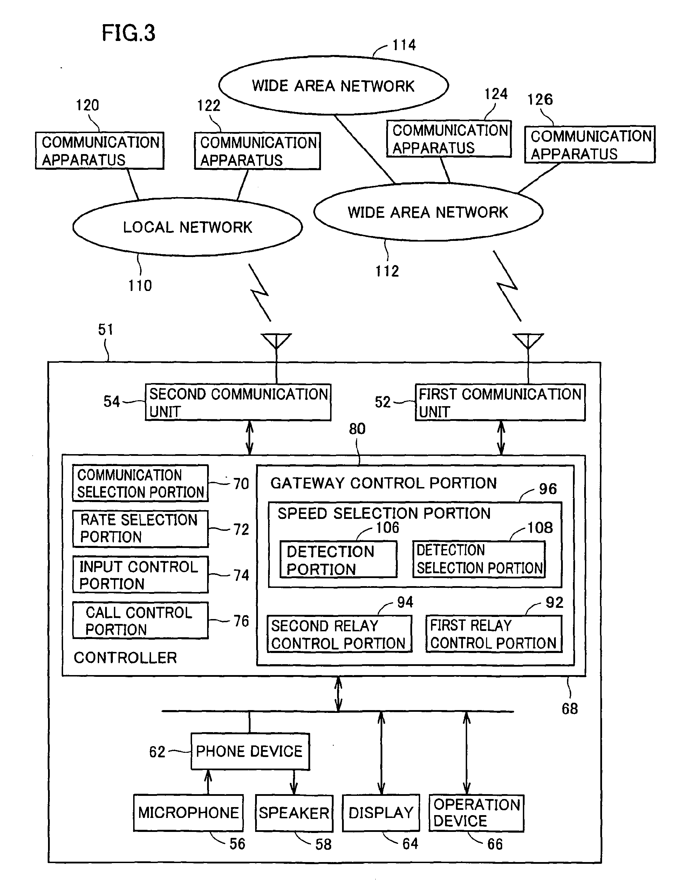

Fig. 3 shows a configuration of a mobile communication terminal 51 and a function of a controller 68 in accordance with the present embodiment. Referring to Fig. 3, controller 68 of mobile communication terminal 51 in accordance with the present embodiment includes communication selection portion 70, rate selection portion 72, input control portion 74, call control portion 76, and a gateway control portion 80. Gateway control portion 80 transmits information received from communication apparatuses 120 and 122 included in local network 110 to communication apparatuses 124 and 126 included in wide area network 112.

Gateway control portion 80 includes first relay control portion 92, second relay control portion 94, and a speed selection portion 96. Speed selection portion 96 selects a communication speed for the first communication unit 52 and a communication speed for the second communication unit 54. Speed selection portion 96 may select one type of communication speed, and the first communication unit 52 and the second communication unit 54 may communicate at the communication speed.

Speed selection portion 96 includes a detection portion 106 and a detection selection portion 108. Detection portion 106 detects that the communication unit selected by communication selection portion 70 is communicating voice data. Detection selection portion 108 selects any of plural types of communication speeds based on whether or not detection portion 106 detects that the communication unit selected by communication selection portion 70 is communicating voice data.

In the present embodiment, a block configured by call control portion 76 and gateway control portion 80 is referred to as a "communication control block".

Since other hardware components are the same as those in the first embodiment described above and identical in function, detailed description thereof will not be repeated herein.

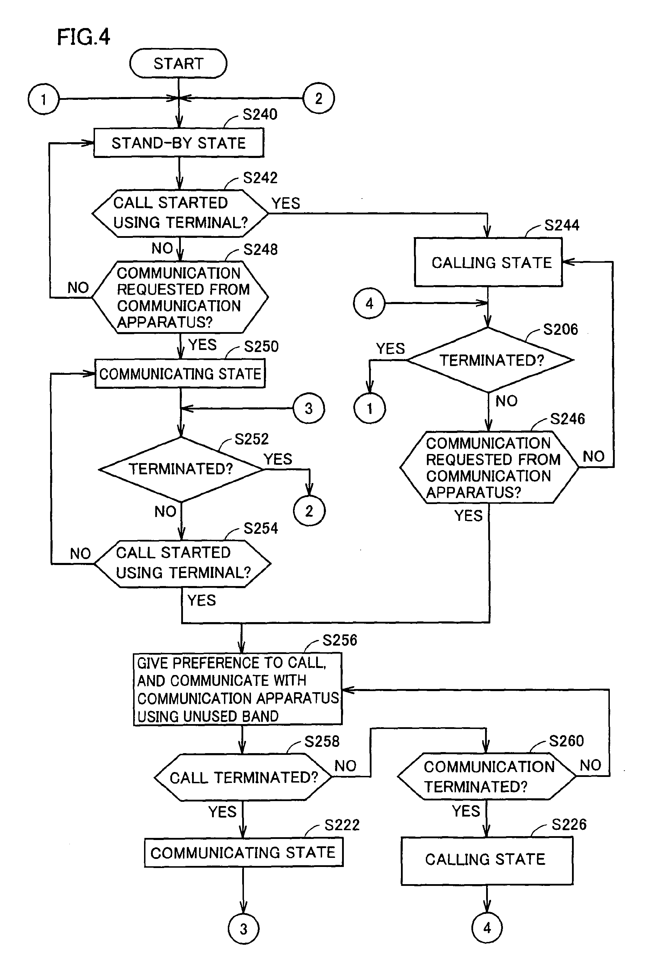

Referring to Fig. 4, a program executed in controller 68 performs control as described below for the communication with communication apparatuses 120 and 122 and communication apparatuses 124 and 126. It is to be noted that, in a flow chart shown in Fig. 4, the processes shown in Fig. 2 described above are denoted by the same step numbers. Since they are identical processes, detailed description thereof will not be repeated herein.

In step S240, call control portion 76 detects a signal received by the first communication unit 52 and the second communication unit 54. In the present embodiment, a state in which communication of a data signal with communication apparatus 120, 122, 124, or 126 is not being performed, and call control portion 76 periodically detects whether or not the first communication unit 52 and the second communication unit 54 receive a signal is referred to as a "standby state".

In step S242, call control portion 76 determines whether or not to start communication for a call. If the first communication unit 52 or the second communication unit 54 receives a signal for starting a call (i.e., data addressed to mobile communication terminal 51), if operation device 66 receives an operation for starting a call, or the like, call control portion 76 determines to start communication for a call. If the communication for a call is started (YES in step S242), the process moves to step S244. Otherwise (NO in step S242), the process moves to step S248.

In step S244, communication selection portion 70 selects a communication unit communicating the signal for a call. If either of the first communication unit 52 and the second communication unit 54 receives the signal for a call, communication selection portion 70 selects the communication unit that receives the signal. If operation device 66 receives the operation for starting a call, communication selection portion 70 selects a predetermined communication unit from among the first communication unit 52 and the second communication unit 54.

When communication selection portion 70 selects the communication unit, detection selection portion 108 selects a communication speed. Detection selection portion 108 selects a communication speed from among the predetermined plural types of communication speeds. The communication speed is selected based on whether or not detection portion 106 detects that the communication unit selected by communication selection portion 70 is communicating voice data. When the communication speed is selected, call control portion 76 establishes communication with one of communication apparatuses 120 and 122 included in local network 110, communication apparatuses 124 and 126 included in wide area network 112, and the like, using the communication unit selected by communication selection portion 70.

If a signal is transmitted in step S240, the signal has been transmitted from the communication apparatus that establishes communication with call control portion 76. If operation device 66 receives the operation for starting a call in step S242, the communication apparatus indicated by the operation information input to operation device 66.

Rate selection portion 72 selects a sampling rate suitable for a communication condition from among a plurality of sampling rates. Call control portion 76 transmits voice data generated by the voice input module according to the sampling rate selected by rate selection portion 72, and controls the first communication unit 52 to receive voice data from communication apparatus 124.

In step S246, the second relay control portion 94 determines whether or not the second communication unit 54 receives a signal for requesting to establish communication (i.e., information for designating relay, or data addressed to communication apparatus 124) from communication apparatus 120. If the second communication unit 54 receives the signal for requesting to establish communication (YES in step S246), the process moves to step S256. Otherwise (NO in step S246), the process moves to step S244.

Similarly, in step S248, the second relay control portion 94 determines whether or not the second communication unit 54 receives a signal for requesting to establish communication (i.e., information for designating relay, or data addressed to communication apparatus 124) from communication apparatus 120. If the second communication unit 54 receives the signal for requesting to establish communication (YES in step S248), the process moves to step S250. Otherwise (NO in step S248), the process moves to step S240.

In step S250, detection selection portion 108 selects a communication speed. Detection selection portion 108 selects the communication speed from among the predetermined plural types of communication speeds. The communication speed is selected based on whether or not detection portion 106 detects that the communication unit selected by communication selection portion 70 is communicating voice data. When the communication speed is selected, the first relay control portion 92 establishes communication with communication apparatus 124, using the first communication unit 52.

When the communication is established, the first relay control portion 92 controls the first communication unit 52 to communicate information with communication apparatus 124. The second relay control portion 94 establishes communication with communication apparatus 120, using the second communication unit 54. When the communication is established, the second relay control portion 94 controls the second communication unit 54 to communicate information. If the first communication unit 52 establishes communication with a plurality of communication apparatuses 120 simultaneously, the first relay control portion 92 also performs routing for the communication by those communication apparatuses.

In step S252, the second relay control portion 94 determines whether or not to terminate the communication with communication apparatus 120, based on a signal communicated by the second communication unit 54. If the communication is terminated (YES in step S252), the process moves to step S240. Otherwise (NO in step S252), the process moves to step S254.

In step S254, call control portion 76 determines whether or not to start communication for a call, based on a signal received by the first communication unit 52, a signal received by the second communication unit 54, an operation received by operation device 66, or the like. If the signal received by the first communication unit 52 and the signal received by the second communication unit 54 are a signal for starting a call (i.e., data addressed to mobile communication terminal 51), if operation device 66 receives an operation for starting a call, or the like, call control portion 76 determines to start communication for a call. If the communication for a call is started (YES in step S254), the process moves to step S256. Otherwise (NO in step S254), the process moves to step S250.

In step S256, if neither the first communication unit 52 nor the second communication unit 54 communicates voice data yet, rate selection portion 72 selects a sampling rate for the voice input module. Rate selection portion 72 selects the sampling rate to have a value lower than that when only one of the communication with communication apparatus 120 and the communication for a call with communication apparatus 124 is being performed.

If the first communication unit 52 or the second communication unit 54 is already communicating voice data, the sampling rate is already selected and thus is not selected again. If a sampling rate is to be selected, the voice input module starts generation of a voice signal after the sampling rate is selected, at the sampling rate selected by rate selection portion 72. If a sampling rate is not to be selected, the voice input module starts generation of a voice signal when this step is started, at the sampling rate already selected by rate selection portion 72. When the generation of a voice signal is started, call control portion 76 controls the communication unit selected by communication selection portion 70 from among the first communication unit 52 and the second communication unit 54 to start transmitting voice data indicated by the signal and receiving voice data from communication apparatus 124.

In step S250, the first relay control portion 92 starts controlling the first communication unit 52. The second relay control portion 94 starts controlling the second communication unit 54. With these controls, the first communication unit 52 transmits a data signal received by the second communication unit 54 at a communication speed selected by detection selection portion 108 for the first communication unit 52. The second communication unit 54 transmits a data signal received by the first communication unit 52 at a communication speed selected by detection selection portion 108 for the second communication unit 54. These communication speeds are selected in step S250.

If the communication unit selected by communication selection portion 70 from among the first communication unit 52 and the second communication unit 54 already starts communication of voice data for a call, the first relay control portion 92 starts controlling the first communication unit 52. The second relay control portion 94 starts controlling the second communication unit 54. With these controls, the first communication unit 52 starts transmitting data received by the second communication unit 54 at a communication speed selected by detection selection portion 108 for the first communication unit 52. The second communication unit 54 starts transmitting data received by the first communication unit 52 at a communication speed selected by detection selection portion 108 for the second communication unit 54. These communication speeds are already selected in step S244.

In the present embodiment, the first relay control portion 92 and the second relay control portion 94 control the first communication unit 52 and the second communication unit 54 to communicate data using a band not used for communicating voice data. If the controls by the first relay control portion 92 and the second relay control portion 94 are started prior to the control by call control portion 76 or the like, the first relay control portion 92 and the second relay control portion 94 control the first communication unit 52 and the second communication unit 54 to transmit a packet of voice data in preference to a packet of data other than that.

In step S258, call control portion 76 determines whether or not to terminate the communication for the call. Call control portion 76 determines to terminate the communication for the call when the first communication unit 52 or the second communication unit 54 receives a signal for terminating the call, when operation device 66 receives an operation for terminating the call, or the like. If the communication for the call is terminated (YES in step S258), the process moves to step S222. Otherwise (NO in step S258), the process moves to step S260.

In step S260, the second relay control portion 94 determines whether or not to terminate the communication with communication apparatus 120, based on data received from communication apparatus 120. If the communication with communication apparatus 120 is terminated (YES in step S260), the process moves to step S226. Otherwise (NO in step S260), the process moves to step S256.

An operation of mobile communication terminal 51 based on the configuration and the flow chart as described above will be further described in detail.

### [When communication apparatus 120 accesses wide area network 112 during a call]

Call control portion 76 detects a signal received by the first communication unit 52 and the second communication unit 54 (step S240).

Upon detecting a signal, call control portion 76 determines whether or not to start communication for a call (step S242). If the second communication unit 54 receives a signal for a call (YES in step S242), communication selection portion 70 selects the second communication unit 54. When the second communication unit 54 is selected, call control portion 76 establishes communication for example with communication apparatus 122 (step S244).

When the communication is established, the second relay control portion 94 determines, after the process in step S206, whether or not communication apparatus 120 requests to establish communication (step S246).

If communication apparatus 120 requests to establish communication (YES in step S246), the first communication unit 52 starts transmitting data received by the second communication unit 54 at a communication speed selected by detection selection portion 108 for the first communication unit 52. The second communication unit 54 starts transmitting data received by the first communication unit 52 at a communication speed selected by detection selection portion 108 for the second communication unit 54 (step S256).

Thereafter, call control portion 76 determines whether or not to terminate the communication for the call (step S258). If the call is not terminated (NO in step S258), the second relay control portion 94 determines whether or not to terminate the communication with communication apparatus 120 (step S260). If the communication is not terminated (NO in step S260), the processes from step S256 onward are repeated.

### [When an incoming call arrives during data communication with communication apparatus 120]

After the process in step S240, call control portion 76 determines whether or not to start communication for a call (step S242). For example, if operation device 66 does not receive an operation for starting a call (NO in step S242), the second relay control portion 94 determines whether or not communication apparatus 120 requests to establish communication (step S248).

If communication apparatus 120 requests to establish communication (YES in step S248), detection selection portion 108 selects a communication speed. When the communication speed is selected, the first relay control portion 92 establishes communication with communication apparatus 124. When the communication is established, the first relay control portion 92 controls the first communication unit 52 to communicate information. The second relay control portion 94 establishes communication with communication apparatus 120. When the communication is established, the second relay control portion 94 controls the second communication unit 54 to communicate information with communication apparatus 120 (step S250). Thereby, mobile communication terminal 51 relays communication of information between communication apparatus 120 and communication apparatus 124.

Thereafter, the second relay control portion 94 determines whether or not to terminate the communication with communication apparatus 120 (step S252). If the communication with communication apparatus 120 is not terminated (NO in step S252), call control portion 76 determines whether or not to start communication for a call (step S254).

If the communication for a call is started (YES in step S254), rate selection portion 72 selects a sampling rate with a value lower than that when only the communication with communication apparatus 120 is being performed. Thereafter, the voice input module starts generation of a voice signal at the sampling rate selected by rate selection portion 72. When the generation of a voice signal is started, call control portion 76 controls the communication unit selected by communication selection portion 70 to start transmitting voice data indicated by the signal and receiving voice data from communication apparatus 124 (step S256).

As described above, mobile communication terminal 51 in accordance with the present embodiment communicates with communication apparatus 124 using the communication unit selected by communication selection portion 70. Specifically, mobile communication terminal 51 can perform data relay (a routing function, a gateway function) between communication apparatuses 120 and 122 and communication apparatuses 124 and 126, while performing a call with another communication device. Since one of the two types of communication units capable of performing wireless communication according to mutually different standards can be selected for communication, communication for a call can be performed using a communication unit suitable for a communication condition in a location of mobile communication terminal 51.

Further, the two types of communication units mounted to mobile communication terminal 51 in accordance with the present embodiment both communicate data according to an Internet protocol. Thereby, cost taken for one communication is reduced, compared to a case where a plurality of communication units mounted to one mobile communication terminal have totally different communication paths. This is because, among the cost taken for one communication, cost not corresponding to the amount of communicated information, such as depreciation cost for communication equipment, is reduced.

Further, when data is communicated according to an Internet protocol, even if either communication unit is used, the communication unit does not occupy a communication line. If one of the two types of communication units described above is of a type occupying a communication line, cost for a call using the communication unit is increased. Since mobile communication terminal 51 in accordance with the present embodiment does not occupy a communication line, the cost for a call can be reduced. Thereby, the cost for a call in mobile communication terminal 51 in accordance with the present embodiment averages lower than that in a mobile communication terminal equipped with a communication unit of a type occupying a communication line.

Further, mobile communication terminal 51 in accordance with the present embodiment allows a user to perform a call in parallel with data communication between communication apparatus 124 and communication apparatus 120. Since voice data communication for a call can be performed in parallel with the data communication, cost for each type of communication taken when both types of communication are performed in parallel is lower than cost taken when only one type of communication is performed.

As a result, a mobile communication terminal reducing the sum of costs taken for one communication when a user communicates data via the Internet at a desired location can be provided.

Further, when mobile communication terminal 51 in accordance with the present embodiment allows a user to perform a call in parallel with data communication, mobile communication terminal 51 reduces a communication speed for the data communication. When the communication speed is reduced, communication of a packet of voice data is facilitated, compared to a case where the communication speed is not reduced. When the communication is facilitated, voice is less likely to be interrupted during the call, and thus the user is less likely to feel uncomfortable with the interrupted voice.

Further, mobile communication terminal 51 in accordance with the present embodiment selects a sampling rate for voice data according to whether or not data communication is being performed. Thereby, when data communication is being performed, the sampling rate can be set lower, compared to a case where data communication is not being performed. This reduces the amount of packets including voice data, and thus time taken for data communication is less likely to be increased, and voice is less likely to be interrupted during a call.

It is to be noted that, in a variation of the present embodiment, call control portion 76 and gateway control portion 80 do not have to be units operable independently of each other. For example, a unit operating only in a case where mobile communication terminal 51 is operated as a phone, a unit operating only in a case where mobile communication terminal 51 is operated as a gateway device, and a unit operating in both cases may constitute one communication control block.

Although the present invention has been described and illustrated in detail, it is clearly understood that the same is by way of illustration and example only and is not to be taken by way of limitation, the scope of the present invention being interpreted by the terms of the appended claims.

## Claims

1. A mobile communication terminal (50), comprising:
a first communication unit (52) connectable to a first communication apparatus (124) via a first network (112) using a first wireless communication protocol;
a second communication unit (54) connectable to a second communication apparatus (120) via a second network (110) using a second wireless communication protocol;
a microphone (56) converting input voice into a first voice signal;
a speaker (58) converting a second voice signal into corresponding voice; and
a controller (60) controlling said first and second communication units for
(a) transmitting first data to said second network via said second communication unit, said first data being addressed to said second communication apparatus and received by said first communication unit,
(b) transmitting second data to said first network via said first communication unit, said second data being addressed to said first communication apparatus and received by said second communication unit,
(c) causing said speaker to convert into the corresponding voice said second voice signal addressed to said mobile communication terminal and received by either one of said first and second communication units, and
(d) transmitting said first voice signal via either one of said first and second communication units.

2. The mobile communication terminal according to claim 1, wherein a communication range of said first communication unit is larger than a communication range of said second communication unit.

3. The mobile communication terminal according to claim 1, wherein said controller performs data transmission/reception according to an Internet protocol via said first and second communication units.

4. The mobile communication terminal according to claim 1, wherein said controller determines whether or not at least one of said first and second communication units is transmitting/receiving the first/second voice signal, and sets a communication speed for said one of said first and second communication units based on a determination result.

5. The mobile communication terminal according to claim 1, wherein said controller counts a number of the communication apparatuses communicating with said second communication unit based on the data received by said second communication unit, and sets a communication speed for at least one of said first and second communication units based on a count result.

6. The mobile communication terminal according to claim 1, wherein, when said controller is transmitting/receiving the data, said controller sets a sampling rate at which said input voice is converted into the first voice signal to be lower than that when said controller is not transmitting/receiving the data.

7. A communication method in a mobile communication terminal, said mobile communication terminal including, a first communication unit connectable to a first communication apparatus via a first network using a first wireless communication protocol, a second communication unit connectable to a second communication apparatus via a second network using a second wireless communication protocol different from said first wireless communication protocol, a microphone converting input voice into a first voice signal, a speaker converting a second voice signal into corresponding voice, and a controller controlling said first and second communication units, said communication method comprising the steps of:
transmitting first data to the second network (S212), said first data being addressed to said second communication apparatus from said first network;
transmitting second data to the first network (S212), said second data being addressed to said first communication apparatus from said second network;
outputting the corresponding voice based on the second voice signal addressed to said mobile communication terminal from either one of said first and second networks (S204); and
transmitting the first voice signal to said either one of said first and second networks (S204).

8. The communication method according to claim 7, wherein a communication range of said first communication unit is larger than a communication range of said second communication unit.

9. The communication method according to claim 7, wherein said controller performs data transmission/reception according to an Internet protocol via said first and second communication units.

10. The communication method according to claim 7, further comprising the steps of:
determining whether or not at least one of said first and second communication units is transmitting/receiving the first/second voice signal (S202); and
setting a communication speed for said one of said first and second communication units based on a determination result (S204).

11. The communication method according to claim 7, further comprising the steps of:
counting a number of the communication apparatuses communicating with said second communication unit based on the data received by said second communication unit; and
setting a communication speed for at least one of said first and second communication units based on a count result (S212).

12. The communication method according to claim 7, further comprising the step of setting a sampling rate at which said input voice is converted into the first voice signal when transmitting/receiving the data addressed to said first and second communication units, to be lower than that when not transmitting/receiving the data addressed to said first and second communication units (S204).
